Europäisches Patentamt

European Patent Office

Office européen des brevets

(11) Publication number: **0 087 149**
**B1**

# EUROPEAN PATENT SPECIFICATION

(45) Date of publication of patent specification: **22.08.90**

(21) Application number: **83101633.2**

(22) Date of filing: **19.02.83**

(51) Int. Cl.⁵: **B 29 C 67/04, B 29 C 67/20**

(54) Semisintered polytetrafluoroethylene article and production thereof.

(30) Priority: **22.02.82 JP 27578/82**

(43) Date of publication of application:
**31.08.83 Bulletin 83/35**

(45) Publication of the grant of the patent:
**22.08.90 Bulletin 90/34**

(84) Designated Contracting States:
**DE FR GB IT**

(56) References cited:
**FR-A-2 222 200**
**GB-A-1 355 373**
**US-A-3 264 391**

**DERWENT JAPANESE PATENTS GAZETTE,**
Derwent Publications, Section Chemical, Week
A 26, 7th August 1978, page 11, no. 46541A/26;
& JP - A - 53 055 379 (NITTO ELECTRIC IND. K.K.)

**DERWENT JAPANESE PATENTS GAZETTE,**
Derwent Publications, Section Chemical, Week
A 26, 7th August 1978, page 11, no. 46540A/26;
& JP - A - 53 055 378 (NITTO ELECTRIC IND. K.K.)

(73) Proprietor: **Daikin Kogyo Co., Ltd.**
**Shinhankyu Building No 1-12-39, Umeda Kita-ku**
**Osaka-shi Osaka-fu (JP)**

(72) Inventor: **Yamamoto, Katsutoshi**
**2-5-25, Syouya**
**Settsu-shi Osaka-fu (JP)**
Inventor: **Kawachi, Syoji**
**1-5, Juban-cho Uegahara**
**Nishinomiya-shi Hyogo-ken (JP)**

(74) Representative: **von Kreisler, Alek, Dipl.-Chem.**
**et al**
**Deichmannhaus am Hauptbahnhof**
**D-5000 Köln 1 (DE)**

(56) References cited:
**DERWENT JAPANESE PATENTS GAZETTE,**
Derwent Publications, Section Chemical, Week
C 29, 27th August 1980, page 33, no. 51072C/29;
& JP - A - 47 032 063 (STATNI VU MATERIALA
TECH.)

Courier Press, Leamington Spa, England.

# EP 0 087 149 B1

## Description

The present invention relates to a semisintered polytetrafluoroethylene (hereinafter referred to as "PTFE") article and a process for producing the semisintered PTFE article. More particularly, it relates to a semisintered PTFE article which is expandable biaxally and a process for producing the article, and further to a porous PTFE material produced by expanding the semisintered PTFE article.

There are known several processes for producing a porous PTFE material by expanding a paste extruded unsintered PTFE article including (1) a process comprising paste extruding PTFE fine powder having a crystallinity of at least 95% at a temperature lower than the melting point of the powder, extracting an extrusion lubricant, drying the article and expanding the article at a temperature lower than the crystalline melting point of PTFE (cf. Japanese Patent Publication Nos. 44664/1973 and 18991/1976), (2) a process comprising heating a sintered PTFE at a temperature more than 327°C and then cooling it very slowly in order to improve the crystallinity of PTFE, and expanding the PTFE article (Japanese Patent Publication No. 42794/1978) and (3) a process comprising sintering a PTFE film at a temperature not lower than 327°C and expanding the sintered sheet across the calendering direction (Japanese Patent Publication (unexamined) No. 55378/1978).

According to the process (1), the produced PTFE material may be biaxially stretchable and has large tensile strength and a very low apparent specific gravity. However, in this process, the used PTFE fine powder should have a crystallinity of at least 95%. The expanded porous PTFE material should be heat set at a temperature higher than the melting point of PTFE and the surface of the unsintered porous PTFE material is tacky and easily contaminated.

In the process (2), the heat set step is not necessary and the produced porous PTFE material has superior gas permeability to an unstretched material. However, the sintered PTFE material can be stretched only monoaxially and the draw ratio is as low as about four. The process comprises many steps including at least two heating steps so that it requires a large amount of heat energy and long time. The produced porous PTFE material has a comparatively high apparent density.

In the process (3), the sintered PTFE sheet is stretchable only in a direction across the calendering direction at a temperature lower than 250°C at a draw ratio smaller than 4.2. The produced porous PTFE material has a comparatively high apparent density.

As a result of the extensive study, it has now been found that a semisintered PTFE article is stretchable biaxially and affords a porous PTFE material having good tensile strength and smooth surface, the density or apparent specific gravity of which may be adjustable with final use.

According to the present invention, there is provided a semisintered polytetrafluoroethylene article which is prepared by heating at least a part of an unsintered polytetrafluoroethylene article at a temperature of at least a melting point of a sintered polymer, the heated part of the article having an endothermic curve at a temperature of 345 ± 5°C on a crystalline melting chart measured with a differential scanning carolimeter and the crystalline conversion of from 0.10 to 0.85 defined by heat of fusion of the unsintered, semisintered and sintered polymers, and crystallinity of the heated portion of the semisintered article measured by X-ray diffraction being from 80 to 93%.

"PTFE" used herein includes a homopolymer of tetrafluoroethylene and copolymers of tetrafluoroethylene modified with not more than 2% by weight of other monomer(s) copolymerizable with tetrafluoroethylene.

The semisintered PTFE article of the invention may be produced by heating a paste extruded or compression molded unsintered PTFE article at a temperature of at least the melting point of the sintered PTFE, preferably of from the melting point of the sintered PTFE to the melting point of the unsintered PTFE. Alternatively, the semisintered article of the invention may be produced by heating the unsintered PTFE article at a temperature higher than the melting point of the unsintered PTFE for a very short period of time, for example, at 360°C for less than 20 seconds. However, the unsintered PTFE article is heated at a temperature lower than the melting point of the sintered PTFE, any longer heating of the unsintered PTFE article cannot afford any semisintered PTFE article.

The heating period of time required in the present process may be determined by measurement of the apparent specific gravity of the heated article. The unsintered PTFE article is porous and its apparent specific gravity is usually from 1.2 to 1.7, preferably from 1.4 to 1.7, which is lower than that of PTFE itself (generally about 2.2). When the porous unsintered PTFE article is heated at a temperature of from 350 to 400°C, which is a usual sintering temperature for PTFE, pores in the article are diminished and the article shrinks with its apparent specific gravity approaching the true specific gravity of PTFE. The same results are achieved by the heating step of the invention. Generally, the apparent specific gravity of the heated PTFE article is at least 1.8. Even a semisintered PTFE article of the invention having a specific gravity of from 2.20 to 2.25 can be expanded to obtain a porous PTFE material.

Another characteristic feature of the semisintered PTFE article of the invention is that its surface is nearly unporous. Therefore, the heating period of time may be determined by observing the porosity of the surface of the heated article. One method for observing the porosity of the surface comprising applying a solvent on the surface. For example, a marker ink is applied on the surface and wiped with a cloth impregnated with a solvent such as toluene. Of the ink is removed, the surface is unporous.

In addition to the above described changes observed in the semisintered PTFE article, transparency of

2

the PTFE article also changes. When the heating temperature is lower than the melting point of the sintered PTFE, the article remains opaque. The thin or small semisintered PTFE article of the invention is generally transparent.

Further, an amorphous index of the semisintered PTFE article of the invention is larger than that of the unsintered PTFE, and smaller than that of the sintered one.

After heating the unsintered PTFE article for a sufficient period of time to obtain the semisintered PTFE article in a furnace or a salt bath kept at an adequate temperature, the semisintered PTFE article is removed from the furnace or the salt bath and cooled and expanded in a separate stage. In the process of the invention, it is not necessary to cool the article slowly. Alternatively, the heated article may be expanded successively while hot.

The crystalline conversion of the semisintered PTFE article of the invention is determined as follows:

A sample of the semisintered PTFE is prepared by cutting out a thin film of 0.1 m thick from the skin layer of the semisintered article and weighing 10.0 ± 0.1 mg of the film. When the semisintered article is a film or sheet having a thickness less than 0.2 mm, 10.0 ± 0.1 mg of the article is directly weighed.

In the same manner as above, 10.0 ± 0.1 mg of a sample of the unsintered PTFE is prepared.

The crystalline melting chart is recorded by means of a differential scanning carolimeter (hereinafter referred to as "DSC", for example DSC-2 of Perkin-Elmer). First the sample of the unsintered PTFE is charged in an aluminum-made pan of the DSC, and heat fusion of the unsintered PTFE and that of the sintered PTFE are measured as follows:

(1) The sample is heated at a heating rate of 160°C/min. to 277°C and then at a heating rate of 10°C/min. from 277°C to 360°C.

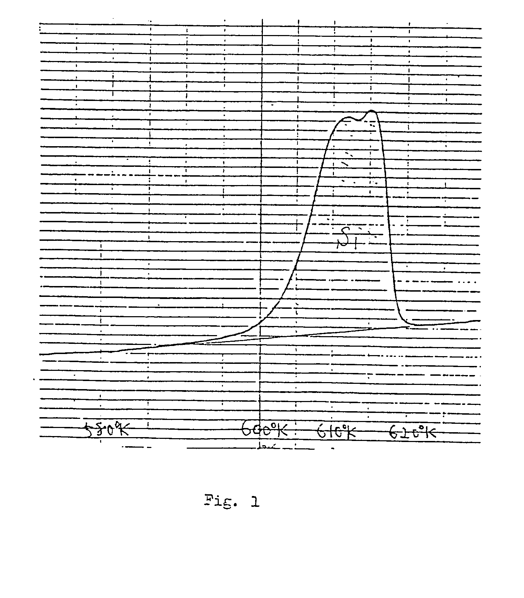

An example of a crystalline melting chart recorded during ths heating step is shown in Fig. 1. A position where an endothermic curve appears in this step is defined as "a melting point of the unsintered PTFE" or PTFE fine powder.

(2) Immediately after heating to 360°C, the sample is cooled at a cooling rate of 80°C/min. to 277°C, and

(3) again the sample is heated at a heating rate of 10°C/min. to 360°C.

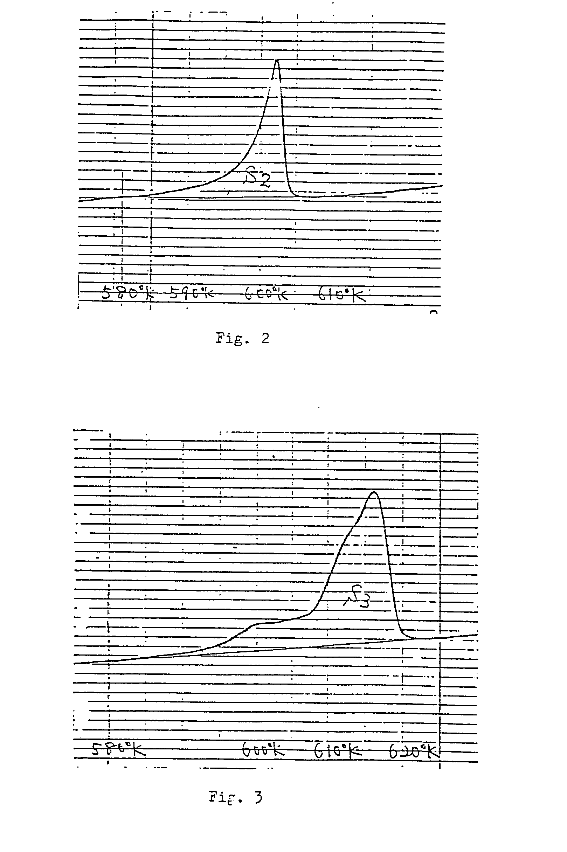

An example of a crystalline melting chart recorded during the heating step (3) is shown in Fig. 2. A position when an endothermic curve appears in the heating step (3) is defined as "a melting point of the sintered PTFE".

The heat of fusion of the unsintered or sintered PTFE is proportional to the area between the endothermic curve and a base line which is drawn from a point on the DSC chart at 307°C (580°K) and tangential with the curve at the right-hand foot of the endothermic curve.

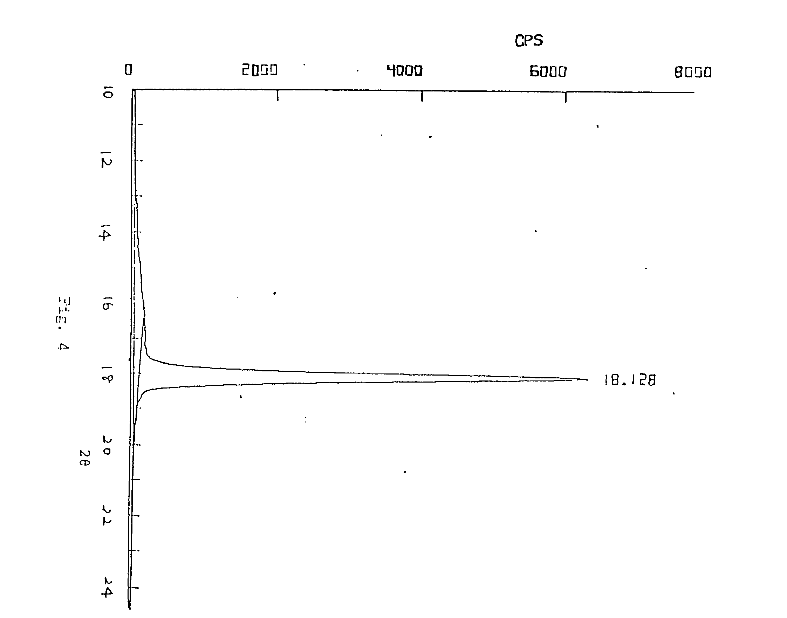

Secondly, a crystalline melting chart for the semisintered PTFE is recorded following the step (1), an example of which chart is shown in Fig. 3.

Then, the crystalline conversion is defined by the following equation:

Crystalline conversion = $(S_1 - S_3)/(S_1 - S_2)$ wherein $S_1$ is the area of the endothermic curve of the unsintered PTFE (cf. Fig. 1), $S_2$ is the area of the endothermic curve of the sintered PTFE (cf. Fig. 2) and $S_3$ is the area of the endothermic curve of the semisintered PTFE (cf. Fig. 3).

Generally, the crystalline conversion of the semisintered PTFE article of the invention is from 0.10 to 0.85, preferably from 0.15 to 0.70.

The crystallinity is defined by X-ray diffraction as follows:

The used X-ray diffractometer is Geiger Flex Rad-II A (Riken Electric Company). A source of X-ray is Cu-$K_\alpha$ and X-ray is monochromatized by means of a monochromator.

A sample of the semisintered PTFE is charged in an aluminum-made holder and X-ray diffraction pattern at 2 θ ranging from 10° to 25° is measured. A typical X-ray diffraction pattern is shown in Fig. 4.

The crystallinity is determined by the peak at 2 θ = 18° corresponding to the crystalline portion and that at 2 θ 16° corresponding to the amorphous portion as follows:

In order to separate an area for the crystalline portion and that for the amorphous portion in the X-ray diffraction peak, a line is drawn from a point on the curve at 2 θ = 16° to the right-hand foot of the peak as shown in Fig. 4.

The crystallinity is calculated by the following equation:

$$\text{Crystallinity (\%)} = \frac{100 \text{ Ic}}{\text{Ic} + 0.66 \text{ Ia}}$$

wherein Ic is the area for the crystalline portion and Ia is the area for the amorphous portion.

Generally, the crystallinity of the semisintered PTFE article of the invention is from 80 to 93%, preferably from 85 to 92%.

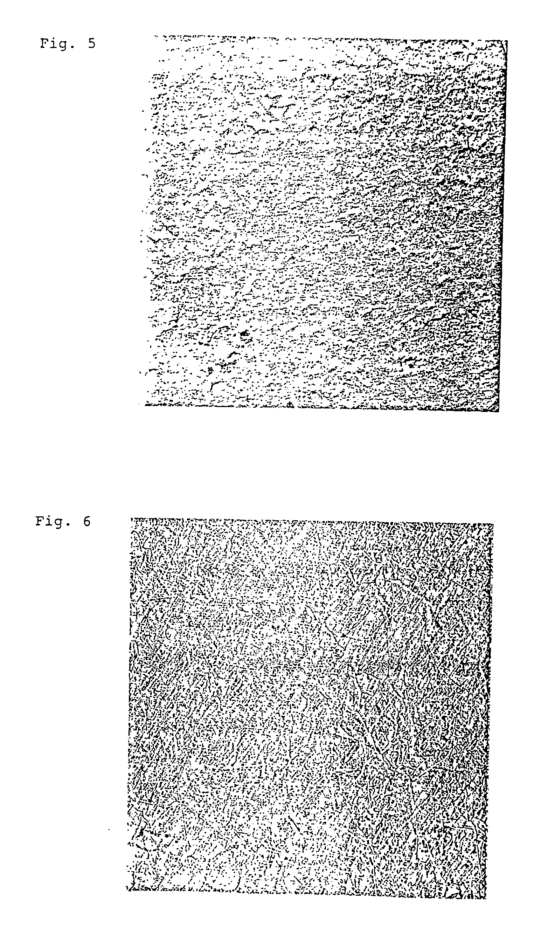

It is found that the semisintered PTFE article of the invention has a characteristic surface condition in comparison with the unsintered and sintered PTFE articles. This is demonstrated in Figs. 5 to 7, which are scanning electron microscopic photographs of the replicas of the surfaces of the unsintered PTFE article (film No. (19) in Example 3, Table 8), of the semisintered PTFE article (film No. (12) in Example 3, Table 8), and of the sintered PTFE article (film No. (18) in Example 3, Table 8) (each × 16,000).

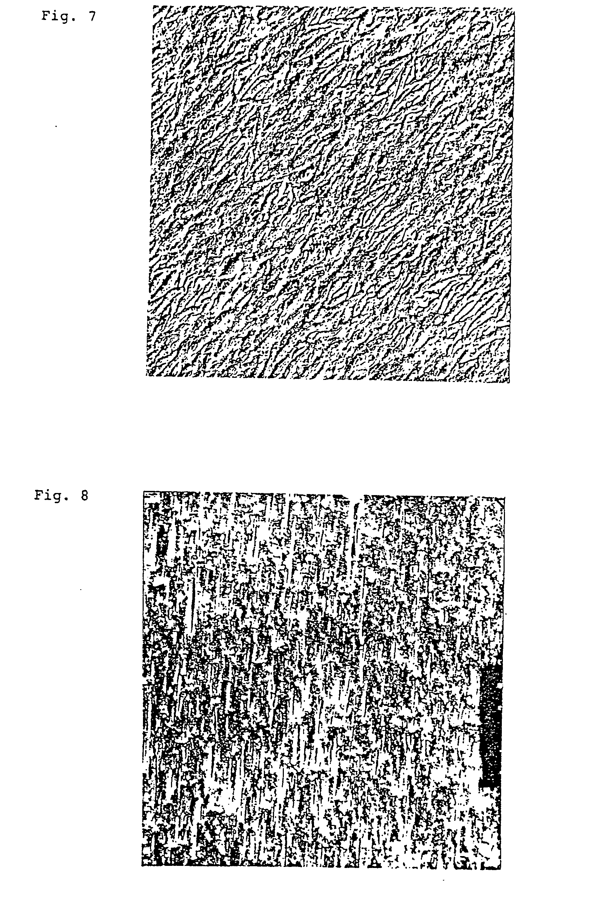

On the surface of the unsintered PTFE article shown in Fig. 5, a number of particles are observed. On the surface of the sintered PTFE article shown in Fig. 7, the well developed band structure which is characteristic of the PTFE article is observed. On the contrary, on the surface of the semisintered PTFE article of the invention, particles or band structure is not or hardly observed. In Fig. 6, any particle or band structure is not observed.

The semisintered PTFE article of the invention may be any conventional shape such as film, sheet, tube, rod, etc. When the thickness of the film or sheet, the wall thickness of the tube or the diameter of the rod is not less than 0.2 mm, only the surface layer of at least 0.1 mm thick on at least one surface of the article or at least 0.1% of the cross section of the article may have the properties of the semisintered PTFE article as described above, and such article is also within the scope of the invention.

In the semisintered PTFE article of the invention, organic or inorganic fillers may be incorporated in order to improve the mechanical, physical and chemical properties and to endow various functions to the semisintered PTFE article. Specific examples of the fillers are glass, carbon, graphite, silica, titanium oxide, zinc oxide, potassium titanate, talc, polymers (eg. tetrafluoroethylene polymers, polyamides, polyamideimide, etc.).

In order to improve the adhesion property of the surface of the semisintered PTFE article of the invention, it may be etched by a per se conventional technique, for example, by surface treatment with a naphthalene complex in a solution of sodium in an aqueous ammonia or a cyclic ether, or by sputter-etching.

The semisintered PTFE article of the invention is per se useful. For example, a semisintered PTFE film may be used as a cap of a container for a solvent. Since its surface before expanded is unporous, it effectively seals the solvent. Once it is expanded by application of pressure, for example, with a finger, it becomes porous and the solvent permeates the porous article.

The semisintered PTFE article of the invention is fusion bondable each other or to other substrates. It may be laminated or formed in a gasket.

Further, the semisintered PTFE article is expandable or stretchable, and forms a porous PTFE material, which is also within the scope of the invention.

Expansion or stretching of the semisintered PTFE article is carried out by a per se conventional method at a temperature of from a room temperature to the melting point of the unsintered PTFE.

The draw ratio may vary with the final use and is usually up to about 10.

The semisintered PTFE article of the invention can be expanded at an expansion rate as low as 0.5%/sec., and may be expanded even with a finger.

In the expansion of the semisintered PTFE article, dimensional change is larger than that of the conventional PTFE article. For example, in case of preparation of a film thinner 25 μ, since large dimensional change does not occur in expanding an unsintered film, a very thin unsintered film must be expanded. However, a calendered unsintered film is frilled, and particle orientation is not homogeneous so that the strength of the film is uneven. Therefore, it is very difficult to produce a thin PTFE porous film commercially by the conventional methods, and a commercially available PTFE porous film has a thickness larger than 50 μ. On the contrary, according to the present invention, a thin PTFE porous film as well as a thick PTFE porous film is easily prepared.

The porous PTFE material prepared by expanding the semisintered PTFE article of the invention has an endothermic curve at 345 ± 5°C on a crystalline melting chart. The area of the endothermic curve of the porous PTFE material is smaller than that of the semisintered PTFE article.

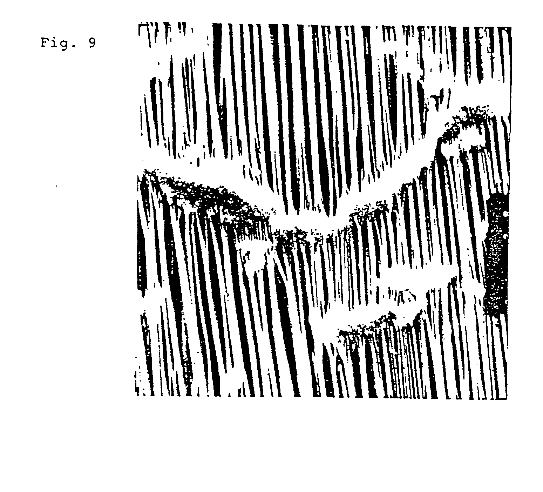

When the porous PTFE material is to be used as a filter, it is desired for the material to be jammed as little as possible and to have a high transmission rate of a filtrate, and also to have excellent mechanical properties. The porous PTFE material of the invention has a peculair structure that porosity of the surface is smaller than that of the inner region. These structural characteristics are shown in Figs. 8 and 9, which are scanning electron microscopic photographs of the surface of the porous PTFE material (×3000) of film No. 4 (not heat set) in Table 4 of Example 1 and of the cross section (×3000) of film No. 2 (heat set) in Table 4 of Example 1 respectively. Thus, the porous PTFE material of the invention is hardly jammed and has a relatively high transmission rate even when it is thick.

When the conventional calendered PTFE film is expanded in a direction across the calendering direction, its mechanical strength becomes deteriorated and should be laminated to obtain a film having equal strength in any direction. However, the porous PTFE film of the invention has excellent strength in directions across and along the calendering direction and can be used as a monolayer film.

The present invention will be hereinafter explained further in detail by the following Examples wherein parts are by weight.

## Example 1

### (1) Preparation of unsintered PTFE article

A cylindrical rod was made by extruding a mixture of PTFE fine powder ("Polyflon fine powder F-104" manufactured by Daikin Kogyo Co., Ltd.) (100 parts) and an extrusion assistant, a hydrocarbon oil ("Isopar M" manufactured by Esso Oil Co., Ltd.) (24 parts) with an extruder having a cylinder inner diameter of 130 mm and an extruding mold die inner diameter of 12 mm. The extruded rod was calendered with rolls heated at 70°C at a rate of 28 mm/min. to obtain a film. The film was immersed in trichloroethylene kept at 50°C to extract the extrusion assistant and air dried. The formed unsintered PTFE film had an average

4

thickness of 100 µm, an average width of 200 mm and an apparent density of 1.5 g/cm³.

The mechanical strength of the unsintered film of 10 mm wide was measured at a pulling rate of 200 mm/min. in a direction across or along the calendering direction. The results are shown in Table 1.

<u>Table 1</u>

| Pulling direction | Tensile strength (MPa) | Elongation (%) |
|---|---|---|
| Across calendering direction | 14.7 | 200 |
| Along calendering direction | 1.5 | 1500 |

(2) Heating of unsintered film

The thus obtained unsintered PTFE film was heated in an oven kept at 200°C, 300°C, 320°C, 330°C or 360°C for a predetermined period of time and cooled to a room temperature. The properties of the heated films were measured as follows:

Density

Measured according to JIS (Japanese Industrial Standard) 6892—1976.

Transparnency

Determined by viewing.

Endothermic curve in DSC chart

Measured as described above.

Amorphous index

Determined as a ratio of absorption at 778 cm$^{-1}$ to that at 2367 cm$^{-1}$ of infrared absorption spectrum.

Tensile strength and elongation

In cases of film Nos. (1), (2) and (3), the film was cut in a direction along the calendering direction into a strip of 10 mm wide, and in cases of the film Nos. (4) to (8), the film was cut into JIS No. 3 dumbbell. The tensile strength and elongation were measured at room temperature at a pulling rate of 200 mm/min.

Permeability of marker ink

Commercially available marker ink (trade name "Magic ink") was diluted with twice volume of toluene and applied on the film with a brush. After dried, the inked surface was wiped with a cloth impregnated with toluene.

The results are shown in Tables 2(1) and 2(2).

In this Example, the films (4) and (6) are within the scope of the invention, and others are comparative.

Table 2(1)

| Film No. | Heating | | Density (g/cm³) | Degree of shrinkage (%) | | Transparency | Endothermic peak in DSC (°C) | Amorphous index |
|---|---|---|---|---|---|---|---|---|
| | Temp. (°C) | Time | | Along *1) | Across *2) | | | |
| (1) | 200 | 30min. | 1.55 | 5 | 0.5 | Opaque | 346.5 | 0.12 |
| (2) | 300 | 30min. | 1.65 | 7.5 | 1 | Opaque | 346 | 0.12 |
| (3) | 320 | 30min. | 1.75 | 9 | 1 | Opaque | 347 | 0.13 |
| (4) | 330 | 30min. | 2.05 | 21 | 6 | Substantially transparent | 346 | 0.35 |
| (5) | 360 | 30sec. | 2.15 | 26 | 8 | Transparent | 327 | 1.63 |
| (6) | 360 | 5sec. | 2.21 | 24 | 6 | Transparent | 346 | 0.42 |
| (7) | 360 | 30min. | 2.16 | 26 | 7 | Transparent | 327 | 1.60 |
| (8) | 360 | 5min. | 2.15 | 26 | 8 | Transparent | 326 | 1.61 |

Note 1)  Direction along the calendering direction
     2)  Direction across the calendering direction

Table 2(2)

| Film No. | Crystalline conversion | Permeability of marker ink | Tensile strength (MPa) | | Elongation (%) | |
|---|---|---|---|---|---|---|
| | | | Along *1) | Across *2) | Along *1) | Across *2) |
| (1) | 0 | Yes | 15.0 | 1.6 | 350 | 1600 |
| (2) | 0 | Yes | 15.5 | 1.6 | 340 | 1500 |
| (3) | 0.02 | Yes | 16.0 | 1.7 | 340 | 1500 |
| (4) | 0.25 | No | 29.4 | 20.6 | 480 | 1100 |
| (5) | 1.01 | No | 60.7 | 51.9 | 240 | 500 |
| (6) | 0.84 | No | 31.3 | 21.6 | 480 | 1000 |
| (7) | 1.01 | No | 57.8 | 50.5 | 250 | 600 |
| (8) | 1.01 | No | 59.8 | 51.0 | 230 | 550 |

Notes 1) and 2)   See Notes of Table 2(1).

EP 0 087 149 B1

(3) Expansion of heated film

I. Expansion of cut film

Each heated film was cut into a strip of 20 mm wide and 50 mm long. The strip was stretched in a direction along or across the calendering direction with the side ends free at a pulling rate of 100%/sec. to 700%.

Stretchability of the strip and reduction rates of thickness and width, density and tensile strength of the thus formed porous PTFE film are shown in Table 3.

The tensile strength was measured with a strip of 10 mm wide when the width was not less than 10 mm or with the film as such when the width was less than 10 mm at a pulling rate of 200 mm/min.

Table 3

| Film No. | Stretching direction | Stretcha-bility | Reduction rate (%) | | Density (g/cm³) | Tensile strength (MPa) |
|---|---|---|---|---|---|---|
| | | | Thickness | Width | | |
| (1) | Along | Yes | 6 | 3 | 0.4 | 34.3 |
| | Across | (Uneven) | — | — | — | — |
| (2) | Along | Yes | 5 | 9 | 0.4 | 34.3 |
| | Across | (Uneven) | — | — | — | — |
| (3) | Along | Yes | 6 | 9 | 0.4 | 39.2 |
| | Across | (Uneven) | — | — | — | — |
| (4) | Along | Yes | 32 | 35 | 0.7 | 53.9 |
| | Across | Yes | 32 | 55 | 1.4 | 201 |
| (5) | Along | (Broken) | — | — | — | — |
| | Across | (Broken) | — | — | — | — |
| (6) | Along | Yes | 34 | 36 | 0.8 | 59.8 |
| | Across | Yes | 34 | 55 | 1.5 | 206 |
| (7) | Along | (Broken) | — | — | — | — |
| | Across | (Broken) | — | — | — | — |
| (8) | Along | (Broken) | — | — | — | — |
| | Across | (Broken) | — | — | — | — |

EP 0 087 149 B1

As understood from the results shown in Table 3, the porous PTFE films formed from the film Nos. (4) and (6) are stretchable in the direction across the calendering direction and have excellent tensile strength in this direction.

II. Expansion of uncut film

The heated film No. (4) of 100 mm long was stretched in a direction along the calendering direction at a pulling rate of 250%/sec. in a furnace kept at 300°C to a predetermined expansion ratio.

Reduction rates of thickness and width, density, tensile strength and matrix strength are shown in Table 4.

In the same manner as described above, the heated film Nos. (2) an (4) were stretched to 600%. Then, the temperature in the furnace was raised to 350°C and kept at the same temperature for 10 minutes (heat setting). When the film was removed from the furnace, it shrunk further.

Reduction rates of thickness and width, density tensile strength and matrix strength of the thus formed porous PTFE film are shown in Table 5.

The reduction rates of the thickness and width of the film were calculated from the thickness and width of the central portion of the film before and after stretching respectively. The density of the film was calculated from the weight and thickness of the 5 cm × 5 cm piece cut from the central portion of the film.

The tensile strength of the film was an average value obtained by cutting out 5 strips of each 10 mm wide and 100 mm long from the film and measuring the tensile strength of each strip at a pulling rate of 200 mm/min.

The matrix strength shown in Tables 4 and 5 was calculated according to the following equation:

$$\text{Matrix strength} = \frac{\text{Tensile strength} \times 2.2}{\text{Density of stretched film}}$$

Table 4

| Stretching ratio | Reduction rate (%) | | Density | Tensile strength | Matrix strength |
| --- | --- | --- | --- | --- | --- |
| | Width | Thickness | (g/cm³) | (MPa) | (MPa) |
| 2.5 | 14 | 25 | 1.38 | 58.3 | 91.3 |
| 4.5 | 17 | 37 | 0.92 | 57.8 | 137 |
| 6 | 23 | 45 | 0.80 | 61.8 | 167 |
| 8 | 29 | 56 | 0.76 | 101 | 294 |
| 10 | 34 | 66 | 0.72 | 137 | 421 |
| 12.5 | 38 | 72 | 0.68 | 165 | 539 |

Table 5

| Film No. | Heat setting | Reduction rate (%) | | Density | Tensile strength | Matrix strength |
| --- | --- | --- | --- | --- | --- | --- |
| | | Width | Thickness | (g/cm³) | (MPa) | (MPa) |
| (4) | No *1) | 23 | 45 | 0.80 | 61.7 | 167 |
| | Yes | 45 | 55 | 1.40 | 108 | 167 |
| (2) | No | 10 | 25 | 0.32 | 21.6 | 147 |
| | Yes *2) | 25 | 30 | 0.40 | 29.4 | 167 |

Note 1) The surface of this film is shown in Fig. 8.
2) The cross section of this film is shown in Fig. 9.

EP 0 087 149 B1

III. Expansion at a rate of not larger than 5 %/sec

The heated film (4) of 20 mm wide and 50 mm long was stretched with the side ends free at a predetermined pulling rate to 500% in a direction along the calendering direction or to 800% in a direction across the calendering direction at 50°C.

The tensile strength was measured with a strip of 10 mm wide when the width was not less than 10 mm or with the film as such when the width is less than 10 mm at a pulling rate of 200 mm/min. in a direction along the calendering direction.

The density of the stretched film was determined as a ratio of the weight of a piece of the film (g) to the volume of the piece (width (cm) × length (cm) × thickness (cm)).

The results are shown in Table 6.

<p align="center">Table 6</p>

| Stretching rate (%/sec.) | | Breaking of film | Tensile strength (MPa) | Density (g/cm³) |
|---|---|---|---|---|
| Along | Across | | | |
| 1.5 | — | No | 57.8 | 1.1 |
| 0.5 | — | No | 57.3 | 1.1 |
| — | 5.0 | No | 62.9 | 1.0 |
| — | 1.5 | No | 64.0 | 1.1 |
| — | 0.5 | No | 62.1 | 1.1 |

The same film was easily stretched with fingers in both directions along and across the calendering direction to afford a porous PTFE film having a density of 1.1 g/cm³.

IV. Expansion of compression molded article

A PTFE sheet of 100 mm wide and 1 mm thick was made from the same PTFE fine powder as used in Example 1 by compression molding under 200 Kg/cm² and heated in a salt bath kept at a predetermined temperature for a predetermined period of time.

The thus heated sheet was cut into a strip of 5 mm wide and 25 mm long. The strip was stretched in a direction along the calendering direction at a pulling rate of 1,000%/sec. to 1,000% in a furnace kept at 300°C.

Specific gravity of the unstretched sheet, stretchability of the sheet and density of the stretched sheet are shown in Table 7.

EP 0 087 149 B1

Table 7

| Heating conditions (Temp. x Time) | 300°C x 5min. (Comparative) | 340°C x 5min. | 360°C x 5min. (Comparative) |
|---|---|---|---|
| Specific gravity of unstretched sheet | 1.65 | 2.22 | 2.17 |
| Stretchability | Broken at 10 % | Yes | Broken at 300 % |
| Density of stretched sheet (g/cm³) | — | 1.1 | — |

## Example 2

In the same manner as in Example 1 but stretching the film at 25 ± 2°C, a stretched PTFE film was prepared.

The properties of the thus obtained film are shown in Table 8, in which film Nos. (16) to (19) are comparative.

Table 8

| Film No. | Heating | | Exsistance of Endo-thermic peak at 345 ± 5°C | Crystlline conversion | Crystal-linity (%) | Transpar-ency | Specific gravity of Semi-sintered film (g/cm³) | Stretching direction | Stretcha-bility |
|---|---|---|---|---|---|---|---|---|---|
| | Temp. (°C) | Time (min.) | | | | | | | |
| (9) | 328.6 | 30 | Yes | 0.16 | 93 | Opaque | 1.95 | Along *1) | Yes |
| | | | | | | | | Across *2) | Yes |
| (10) | 333.0 | 5 | Yes | 0.44 | 89 | Trans-parent | 2.23 | Along *1) | Yes |
| | | | | | | | | Across *2) | Yes |
| (11) | 333.0 | 30 | Yes | 0.48 | 92 | Trans-parent | 2.23 | Along *1) | Yes |
| | | | | | | | | Across *2) | Yes |
| *4) (12) | 335.0 | 5 | Yes | 0.57 | 86 | Trans-parent | 2.19 | Along *1) | Yes |
| | | | | | | | | Across *2) | Yes |
| (13) | 335.0 | 30 | Yes | 0.82 | 84 | Trans-parent | 2.32 | Along *1) | Yes |
| | | | | | | | | Across *2) | Yes |
| (14) | 347.5 | 0.1 | Yes | 0.47 | 85 | Trans-parent | 2.22 | Along *1) | Yes |
| | | | | | | | | Across *2) | Yes |
| (15) | 347.5 | 0.2 | Yes | 0.05 | 81 | Trans-parent | 2.18 | Along *1) | Yes |
| | | | | | | | | Across *2) | Yes |

Table 8   (continued)

| Film No. | Heating | | Exsistance of Endo-thermic peak at 345 ± 5°C | Crystlline conversion | Crystal-linity (%) | Transpar-ency | Specific gravity of Semi-sintered film (g/cm³) | Stretching direction | Stretcha-bility |
|---|---|---|---|---|---|---|---|---|---|
| | Temp. (°C) | Time (min.) | | | | | | | |
| (16) | 324.8 | 60 | Yes | 0.05 | 95 | Opaque | 1.81 | Along *1) | Yes |
| | | | | | | | | Across *2) | (Uneven) |
| (17) | 347.5 | 0.4 | Yes *3) | 0.98 | 81 | Trans-parent | 2.16 | Along *1) | (Broken) |
| | | | | | | | | Across *2) | (Broken) |
| *5) (18) | 347.5 | 1 | No | 1.01 | 79 | Trans-parent | 2.14 | Along *1) | (Broken) |
| | | | | | | | | Across *2) | (Broken) |
| *6) (19) | (Not heated) | | Yes | 0 | 97 | Opaque | 1.55 | Along *1) | Yes |
| | | | | | | | | Across *2) | (Uneven) |

Note 1) and 2)   See Notes of Table 2(1).
     3)   small and broad
     4)   The surface of this film is shown in Fig. 6.
     5)   The surface of this film is shown in Fig. 7.
     6)   The surface of this film is shown in Fig. 5.

## Example 3

The films obtained in Example 1 (1) and the heated cut films Nos. (4) and (5) were cut into a strip of 50 mm long and 10 mm wide. Two strips cut out from the same film were superposed each other, and at one of the shorter ends of the superposed films the area of 10 mm × 5 mm was interposed in a hot press and kept under 1 MPa at 370°C for 2 minutes to bond the end portions.

The adhesive strength of the bonded films was measured by pulling apart the non-bonded shorter end with a tensile strength.

The same test was repeated but using "Teflon 6J" (Trade name) in place of "Polyflon fine powder F-104".

The results are shown in Table 9, column A.

The bonded films were further heated at 370°C for 30 minutes and adhesion strength was measured. The results are shown in Table 9, column B.

### Table 9

| PTFE fine powder | Film | Adhesion strength (N/cm) | |
|---|---|---|---|
| | | A | B |
| Polyflon F-104 | Unsintered film | 18 | 25 |
| | Film No. (4) | 17 | 22 |
| | Film No. (5) | 12 | 11 |
| Teflon 6J | Unsintered film | 18 | 25 |
| | Semisintered film | 18 | 20 |
| | Sintered film | 11 | 12 |

As understood from the results shown in Table 9, the semisintered PTFE film was well as the unsintered PTFE film has a strong adhesivity when the films are heat pressed. On the contrary, the sintered PTFE film has a poor adhesivity. Further, it is also understood from the results that the object of the invention is achieved irrespective of the kinds of the PTFE fine powders.

## Claims

1. A semisintered homopolymer article of tetrafluoroethylene or copolymers of tetrafluoroethylene modified with not more than 2% by weight of other monomer(s) copolymerizable with tetrafluoroethylene which is prepared for heating at least a part of an unsintered homopolymer article of tetrafluoroethylene or copolymers of tetrafluoroethylene modified with not more than 2% by weight of other monomer(s) copolymerizable with tetrafluoroethylene at a temperature of at least a melting point of the sintered polytetrafluoroethylene, the heated part of the article having an endothermic curve at a temperature of 345 ± 5°C on a crystalline melting chart measured with a differential scanning calorimeter and the crystalline conversion of from 0.10 to 0.85 defined by heat of fusion of the unsintered, semisintered and sintered polymers, and the crystallinity of the heated portion of the semisintered article measured by X-ray diffraction being from 80 to 93%.

2. The semisintered article according to claim 1, wherein the crystalline conversion is from 0.15 to 0.70.

3. The semisintered article according to claim 1, wherein the crystallinity is from 85 to 92%.

4. The semisintered article according to claim 1, wherein the specific gravity of the heated surface of the semisintered article is at least 1.80.

5. The semisintered article according to claim 1, wherein the unsintered article has a specific gravity of at least 1.4.

17

6. The semisintered article according to claim 1, wherein the unsintered article is a sheet or a film having a thickness less than 0.2 mm.

7. The semisintered article according to claim 1, wherein the unsintered article is a sheet or a film having a thickness of at least 0.2 mm, a tube having a wall thickness of at least 0.2 mm or a rod having a diameter of at least 0.2 mm, and the surface layer having thickness of at least 0.1 mm on at least one surface of the article or at least 0.1% of the cross section of the heated article has the properties as defined in claim 1.

8. A process for producing a semisintered homopolymer article of tetrafluoroethylene or copolymers of tetrafluoroethylene modified with not more than 2% by weight of other monomer(s) copolymerizable with tetrafluoroethylene, which process comprises heating at least part of the unsintered homopolymer article of tetrafluoroethylene or copolymers of tetrafluoroethylene modified with not more than 2% by weight of other monomer(s) copolymerizable with tetrafluoroethylene at a temperature of at least a melting point of sintered polytetrafluoroethylene, the heated part of the article having an endothermic curve at a temperature of 345 ± 5°C on a crystalline melting chart measured with a differential scanning calorimeter and the crystalline conversion of from 0.10 to 0.85 defined by heat of fusion of the unsintered, semisintered and sintered polymers, and the crystallinity of the heated portion of the semisintered article measured by X-ray diffraction being from 80 to 93%.

9. The process according to claim 8, wherein the heating is carried out at a temperature of from the melting point of the sintered polymer to the melting point of the unsintered polymer.

10. A process for producing a porous homopolymer material of tetrafluoroethylene or copolymers of tetrafluoroethylene modified with not more than 2% by weight of other monomer(s) copolymerizable with tetrafluoroethylene which comprises expanding a semisintered article according to any one of claims 1 to 7 at a temperature lower than the melting point of the unsintered polymer.

## Patentansprüche

1. Teilweise gesinterter Gegenstand aus einem Hompolymer von Tetrafluoroethylen oder Copolymeren von Tetrafluoroethylen, das mit nicht mehr als 2 Gew.-% eines oder mehrerer anderer, mit Tetrafluoroethylen copolymerisierbarer Monomerer modifiziert ist, hergestellt durch Erhitzen wenigstens eines Teils eines ungesinterten Gegenstandes aus einem Homopolymer von Tetrafluoroethylen oder Copolymeren von Tetrafluoroethylen, das mit nicht mehr als 2 Gew.-% eines oder mehrerer anderer, mit Tetrafuoroethylen copolymerisierbarer Monomerer modifiziert ist, auf eine Temperatur von wenigstens dem Schmelzpunkt des gesinterten Polytetrafuoroethylenes, wobei der erhitzte Teil des Gegenstandes eine endotherme Kurve bei einer Temperatur von 345 ± 5°C auf einem mittels Differential-Abtast-Kalorimeter gemessenen Kristall-Schmelzdiagramm und die kristalline Umwandlung von 0,10 bis 0,85, definiert durch die Schmelzwärme des ungesinterten, des teilweise gesinterten und des gesinterten Polymers, besitzt und die mittels Röntgenbeugung gemessene kristallinität des erhitzten Teils des teilweise gesinterten Gegenstandes 80 bis 93% beträgt.

2. Teilweise gesinterter Gegenstand nach Anspruch 1, worin die kirstalline Umwandlung 0,15 bis 0,70 beträgt.

3. Teilweise gesinterter Gegenstand nach Anspruch 1, worin die Kristallinität 80 bis 92% beträt.

4. Teilweise gesinterter Gegenstand nach Anspruch 1, wobei das spezifische Gewicht der erhitzten Oberfläche des teilweise gesinterten Gegenstandes wenigstens 1,80 beträgt.

5. Teilweise gesinterter Gegenstand nach Anspruch 1, wobei der ungesinterte Gegenstand ein spezifisches Gewicht von wenigstens 1,4 hat.

6. Teilweise gesinterter Gegenstand nach Anspruch 1, wobei der ungesinterte Gegenstand eine Platte oder eine Folie mit einer Dicke von weniger als 0,2 mm ist.

7. Teilweise gesinterter Gegenstand nach Anspruch 1, wobei der ungesinterte Gegenstand eine Platte oder eine Folie mit einer Dicke von wenigstens 0,2 m, ein Schlauch mit einer Wandstärke von wenigstens 0,2 mm oder ein Stab mit einem Durchmesser von wenigstens 0,2 mm ist und die Oberflächenschicht mit einer Dicke von wenigstens 0,1 mm auf wenigstens einer Oberfläche des erhitzten Gegenstandes oder wenigstens 0,1% des Querschnitts des erhitzten Gegenstandes die Eigenschaften besitzt, wie sie in Anspruch 1 definiert sind.

8. Verfahren zur Herstellung eines teilweise gesinterten Gegenstandes aus einem Homopolymer von Tetrafluoroethylen oder Copolymeren von Tetrafluoroethylen, das mit nicht mehr als 2 Gew.-% eines oder mehrerer anderer, mit Tetrafluoroethylen copolymerisierbarer Monomerer modifiziert ist, umfassend das Erhitzen wenigstens eines Teils des ungesinterten Gegenstandes aus einem Homopolymer von Tetrafluoroethylen und Copolymeren von Tetrafluoroethylen, das mit nicht mehr als 2 Gew.-% eines oder mehrerer anderer, mit Tetrafluoroethylen copolymerisierbarer Monomerer modifiziert ist, auf eine Temperatur von wenigstens dem Schmelzpunkt des gesinterten Polytetrafluoroethylens, wobei der erhitzte Teil des Gegenstandes eine endotherme Kurve bei einer Temperature von 345 ± 5°C auf einem mittels Differential-Abtast-Kalorimeter gemessenen Kristall-Schmelzdiagramm und die kristalline Umwandlung von 0,10 bis 0,85, definiert durch die Schmelzwärme des ungesinterten, des teilweise gesinterten und des gesinterten Polymers, besitzt und die mittels Röntgenbeugung gemessene Kristallinität des erhitzten Teils

18

des teilweise gesinterten Gegenstandes 80 bis 93% beträgt.

9. Verfahren nach Anspruch 8, worin das Erhitzen auf eine Temperatur vom Schmelzpunkt des gesinterten Polymers zu dem Schmelzpunkt des ungesinterten Polymers erfolgt.

10. Verfahren zur Herstellung eines prösen Materials aus einem Homopolymer von Tetrafluoroethylen oder Copolymeren von Tetrafluoroethylen, das mit nicht mehr als 2 Gew.-% eines oder mehrerer anderer, mit Tetrafluoroethylen copolymerisierbarer Monomerer modifiziert ist, umfassend das Ausschäumen eines teilweise gesinterten Gegenstandes nach irgendeinem der Ansprüche 1 bis 7 bei einer Temperatur unterhalb des Schmelzpunktes des ungesinterten Polymers.

**Revendications**

1. Un article semi-fritté en homopolymère de tétrafluoroéthylène ou en copolymères de tétrafluoroéthylène modifié par au plus 2% en poids d'un ou de plusieurs autres monomères copolymérisables avec le tétrafluoroéthylène, qui est préparé par chauffage d'au moins une partie d'un article non fritté en homopolymère de tétrafluoroéthylène ou en copolymères de tétrafluoroéthylène modifié par au plus 2% en poids d'un ou de plusieurs autres monomères copolymérisables avec le tétrafluoroéthylène à une température au moins égale au point de fusion du polytétrafluoroéthylène fritté, la partie chauffée de l'article ayant une courbe endothermique à une température de 345 ± 5°C sur un diagramme de fusion cristalline mesurée à l'aide d'un calorimètre différentiel à balayage et une conversion cristalline de 0,10 à 0,85 définie par la chaleur de fusion des polymères non frittés, semi-frittés et frittés, et la cristallinité de la portion chauffée de l'article semi-fritté mesurée par diffraction des rayons X est de 80 à 93%.

2. L'article semi-fritté selon la revendication 1, selon lequel la conversion cristalline est de 0,15 à 0,70.

3. L'article semi-fritté selon la revendication 1, selon lequel la cristallinité est de 85 à 92%.

4. L'article semi-fritté selon la revendication 1, selon lequel le poids spécifique de la surface chauffée de l'article semi-fritté est d'au moins 1,80.

5. L'article semi-fritté selon la revendication 1, selon lequel l'article non fritté a un poids spécifique d'au moins 1,4.

6. L'article semi-fritté selon la revendication 1, selon lequel l'article non fritté est un feuille ou un film ayant une épaisseur inférieure à 0,2 mm.

7. L'article semi-fritté selon la revendication 1, selon lequel l'article non fritté est une feuille ou un film ayant une épaisseur d'au moins 0,2 mm, un tube ayant une épaisseur de paroi d'au moins 0,2 mm ou une baguette ayant un diamètre d'au moins 0,2 mm, et la couche de surface ayant une épaisseur d'au moins 0,1 mm sur au mins une surface de l'article chauffé ou d'au moins 0,1% de la section transversale de l'article chauffé présente les propriétés telles que définies dans la revendication 1.

8. Un procédé de production d'un article semi-fritté en homopolymère de tétrafluoroéthylène ou en copolymères de tétrafluoroéthylène modifié par au plus 2% en poids d'un ou de plusieurs autres monomères copolymérisables avec le tétrafluoroéthylène, ledit procédé consistant à chauffer au moins une partie de l'article non fritté en homopolymère de tétrafluoroéthylène ou en copolymères de tétrafluoroéthylène modifié par au plus 2% en poids d'un ou de plusieurs autres monomères copolymérisables avec le tétrafluoroéthylène à une température au moins égale au point de fusion de polytétrafluoroéthylène fritté, la partie chauffée de l'article ayant une courbe endothermique à une température de 345 ± 5°C sur un diagramme de fusion cristalline mesurée à l'aide d'un calorimètre différentiel à balayage et une conversion cristalline de 0,10 à 0,85 définie par la chaleur de fusion des polymères non frittés, semi-frittés et frittés, et la cristallinité de la portion chauffée de l'article semi-fritté mesurée par diffraction des rayons X est de 80 à 93%.

9. Le procédé selon la revendication 8, selon lequelle chauffage est conduit à une température allant du point de fusion du polymère fritté au point de fusion du polymère non fritté.

10. Un procédé de production d'un matériau poreux en homopolymère de tétrafluoroéthylène ou en copolymères de tétrafluoroéthylène modifié par au plus 2% en poids d'un ou de plusieurs autres monomères copolymérisables avec le tétafluoroéthylène qui consiste à expanser un article semi-fritté selon l'une quelconque des revendications 1 à 7 à une température inférieure au point de fusion du polymère non fritté.

EP 0 087 149 B1

Fig. 1

Fig. 2

Fig. 3

Fig. 4

Fig. 5

Fig. 6

4

Fig. 7

Fig. 8

Fig. 9